# EUROPEAN PATENT APPLICATION

(11) **EP 0 553 963 A2**
(43) Date of publication of application: **04.08.1993**
(21) Application number: 93300178.6
(22) Date of filing: 13.01.1993
(51) Int. Cl.: H04N 5/217, H04N 1/40

(54) **Signal processing method for output from a solid image sensor**

(30) Priority: 31.01.1992 JP 16116/92; 13.03.1992 JP 55506/92
(71) Applicant: KONICA CORPORATION, Tokyo 160 (JP)
(72) Inventor: Yamamoto, Hiroyuki, Hachioji-shi, Tokyo (JP)
(74) Representative: Wood, Anthony Charles

(57) **Abstract**

A method of processing image signals generated by an image sensor in which image signals of a line image are divided into odd number address signals and even number address signals, the even number signals are delayed by a predetermined time period from the odd number signals, and the even number signals and the odd number signals are synthesized in the order of time sequence. This prevents from having noise, e.g. reset and clock signals, mixed with the image signals.

## Description

### BACKGROUND OF THE INVENTION

The present invention relates to a signal processing method of processing analog signals outputted from a solid image sensor such as a charge coupled device (referred to as CCD, hereinafter) used for a color sensor.

For example, in the case of a color image sensor, there is provided a line sensor in which a pixel array to detect red, a pixel array to detect green and a pixel array to detect blue are disposed in parallel on one chip. An analog signal is successively outputted from each pixel in such a manner that: in each pixel array, the analog signals, the phases of which are shifted by 180° from each other, are outputted alternately from a pixel of an odd number and a pixel of an even number; and after that, the outputted analog signals are synthesized.

When a plurality of pixel arrays are disposed on one chip, the wiring of the transmission line becomes complicated, and further the length of the wiring is increased. For that reason, when the analog signals are outputted alternately from the pixel of an odd number and the pixel of an even number while the phases are shifted, a reset and a clock signal for outputting a pixel signal are mixed with other analog signals, so that the S/N characteristics of the analog signal are deteriorated, and further field-through-level becomes unstable.

In order to solve the aforementioned problems, the following method is adopted: the analog signals are processed by a low-pass-filter so as to remove the noise of high frequency. However, this method is not sufficient to remove the noise.

The present invention has been achieved in view of the aforementioned circumstances. It is a primary object of the present invention to provide a signal processing method characterized in that: analog signals are read out from a solid image sensor without causing noises to be mixed in the said signals.

### SUMMARY OF THE INVENTION

In the first embodiment of the present invention, signal processing is conducted by the following method. That is, the present invention is to provide a signal processing method by which pixel signals outputted from a solid image sensor are processed, said solid image sensor having a plurality of pixel arrays that output pixel signals from pixels of an odd number and pixels of an even number aligned in a line of pixels, the phases of both pixel signal being approximately the same, the outputted pixel signals of an even number being delayed by a predetermined period of time with respect to the outputted pixel signals of an odd number, and the pixel signals of an odd number and those of an even number being synthesized in the manner of time series.

When the pixel signals are outputted from the pixel of an odd number and that of an even number approximately at the same phase, it can be prevented that a clock and a reset signal for outputting a pixel signal on one side affect a pixel signal on the other side, so that the occurrence of noise can be avoided. After the phase of a pixel signal of an even number outputted approximately at the same phase as a pixel signal of an odd number has been delayed by a predetermined period of time with respect to a pixel signal of an odd number, they are synthesized and processed by the circuit having approximately the same structure as a conventional one.

In the second embodiment of the present invention, signal processing is conducted by the following method. That is, the present invention is to provide a signal processing method characterized in that: analog signals are separately outputted at the same phase from a pixel of an odd number and a pixel of an even number; each of the outputted analog signals is converted into a digital signal; and the first half of the effective data period of the digital signal of an odd number, and the latter half of the digital signal of an even number are selected, and the selected digital signals are synthesized in the manner of time series.

When the analog signals are outputted from the pixel of an odd number and that of an even number approximately at the same phase, it can be prevented that a clock and a reset signal for outputting an analog signal on one side affect an analog signal on the other side, so that the occurrence of noise can be avoided.

After each of the outputted analog signals has been converted into a digital signal, the first half of the effective data period of the digital signal of an odd number, and the latter half of the digital signal of an even number are selected, and then the selected digital signals are synthesized in the manner of time series. After that, image processing is conducted in the same circuit structure as a conventional one.

### BRIEF DESCRIPTION OF THE DRAWINGS

Fig. 1 is a circuit diagram showing the first example of the first embodiment of the present invention;
Fig. 2 is a signal waveform diagram of the first example of the first embodiment of the present invention;
Fig. 3 is a schematic illustration showing the specific structure of a color image sensor;
Fig. 4 is a timing chart of the first example of the first embodiment of the present invention;
Fig. 5 is a circuit diagram showing the second example of the first embodiment of the present invention;
Fig. 6 is a signal waveform diagram of the second example of the first embodiment of the present invention;
Fig. 7 is a circuit diagram showing the third example of the first embodiment of the present invention;
Fig. 8 is a circuit diagram showing the fourth example of the first embodiment of the present invention;
Fig. 9 is a signal waveform diagram of the fourth example of the first embodiment of the present invention;

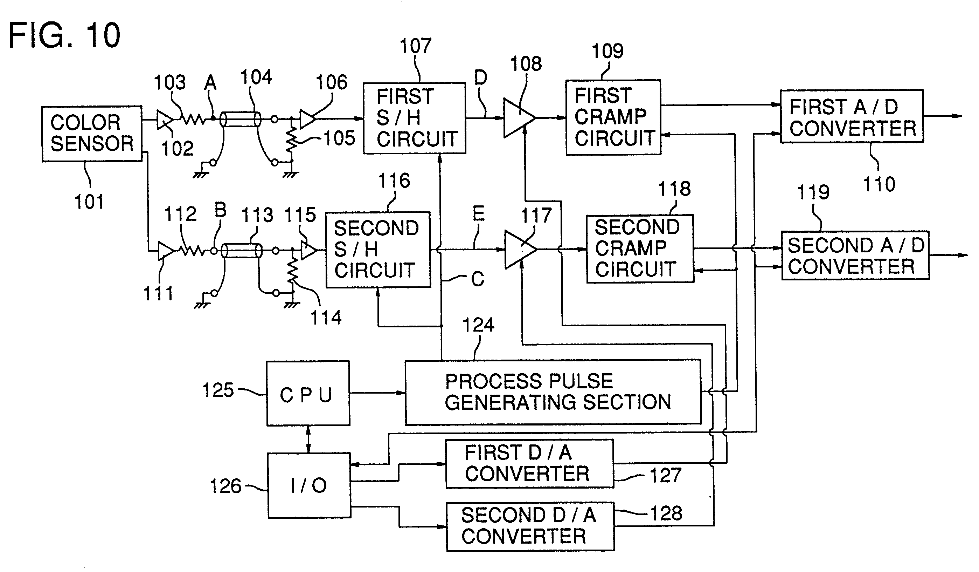

Fig. 10 is a circuit diagram showing an example of the second embodiment of the present invention;
Fig. 11 is a circuit diagram showing another portion of the example of the second embodiment of the present invention;
Fig. 12 is a signal waveform diagram of each portion in Fig. 10;
Fig. 13 is a signal waveform diagram of each portion in Fig. 11;
Fig. 14 is a signal waveform diagram to explain the function and effect of the aforementioned example;
Fig. 15 is a signal waveform diagram in the case where a conventional drive method is adopted;
Fig. 16 is a view showing a specific structure of a color image sensor;
Fig. 17 is an operation timing chart of the aforementioned color image sensor;
Fig. 18 is a view showing another specific structure of a color image sensor; and
Fig. 19 is an operation timing chart of the aforementioned color image sensor.

### DETAILED DESCRIPTION OF THE PREFERRED EMBODIMENT

With reference to the attached drawings, an example of the first embodiment of the present invention will be explained as follows.

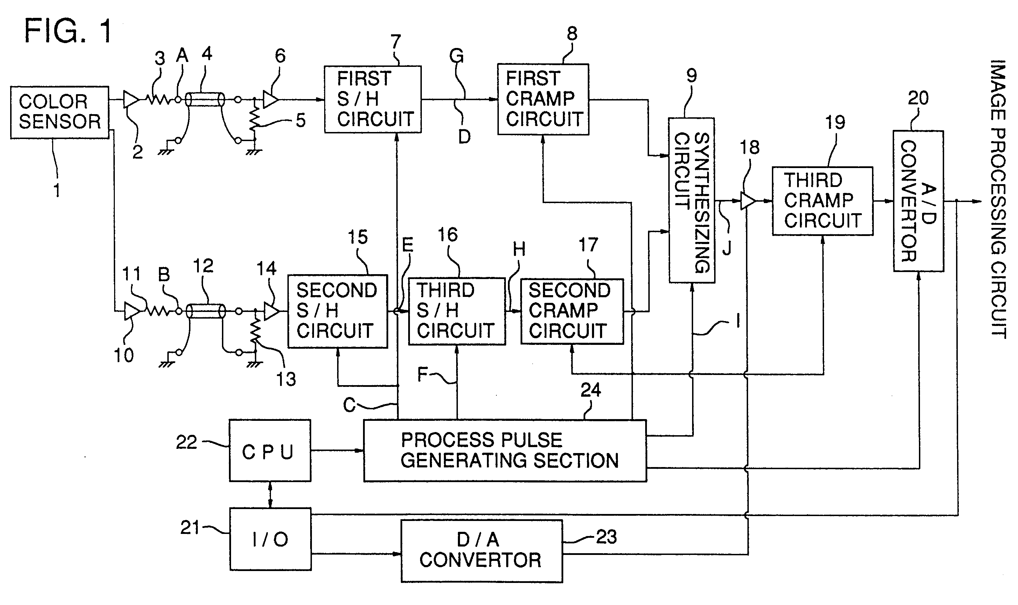

Fig. 1 to Fig. 4 show the first example of the first embodiment of the present invention.

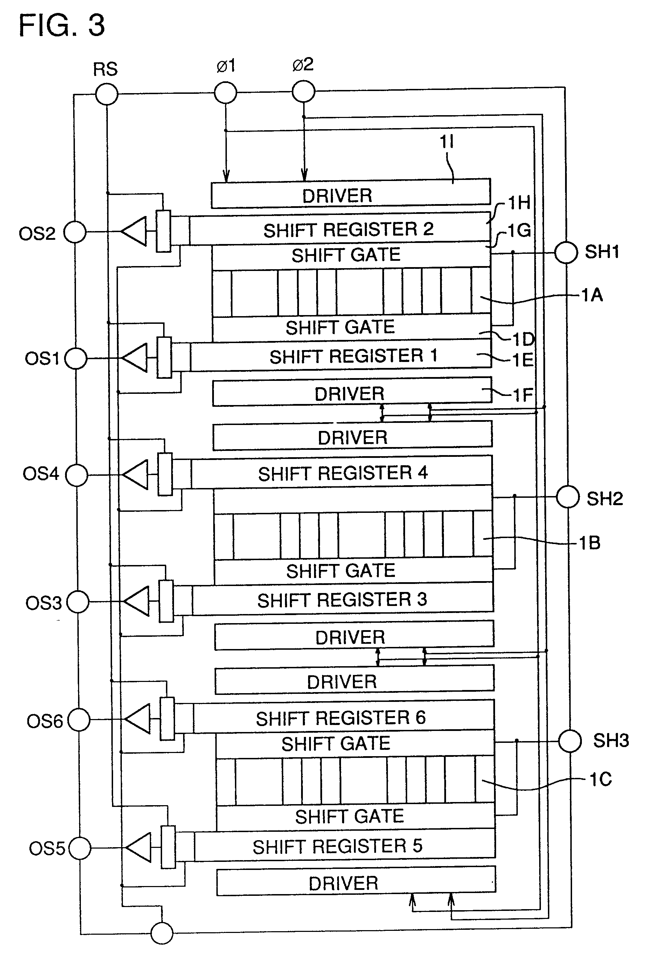

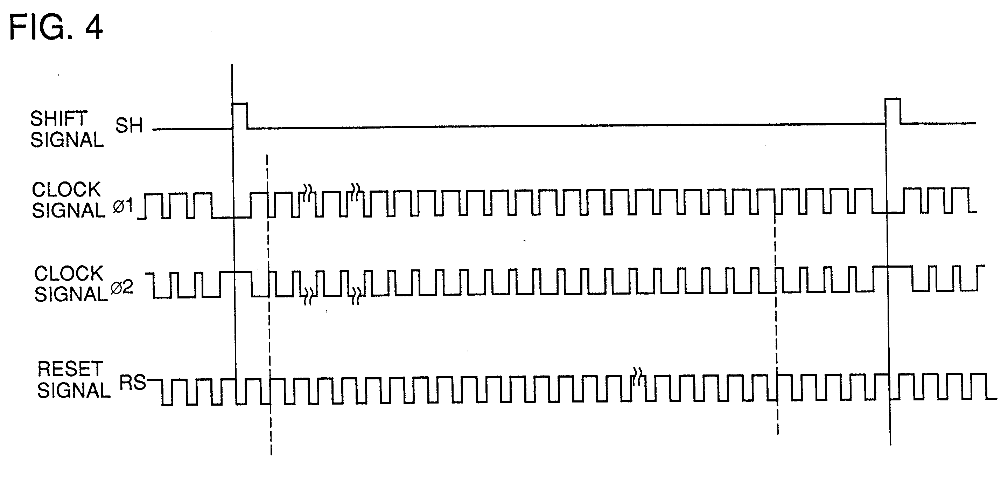

First of all, with reference to the Figs. 3 and 4, the specific structure and operation of the color sensor 1 will be explained as follows. As shown in Fig. 3, the color sensor 1 includes pixel arrays 1A, 1B and 1C in which a number of pixels are aligned in a line, wherein the pixel arrays 1A, 1B and 1C are disposed in parallel. Each of the pixel arrays 1A, 1B and 1C is provided with a shift gate 1D, shift register 1E and driver 1F that are used for outputting an analog signal (referred to as an odd number analog signal, hereinafter) from the pixel of an odd number. Also, each of the pixel arrays 1A, 1b and 1C is provided with a shift gate 1G, shift register 1H and driver 1I that are used for outputting an analog signal (referred to as an even number analog signal, hereinafter) from the pixel of an even number.

When a shift signal is inputted into the shift gates 1D and 1G as shown in Fig. 4, the analog signals of the pixels are introduced into the shift registers 1E and 1H at the same phase. After that, the shift registers 1E and 1H are driven by the clock signals Φ1 and Φ2 through the drivers 1F and 1I so that the analog signals are transmitted. Then, the analog signals of an odd number are respectively outputted from the odd number terminals OS1, OS3 and OS5. On the other hand, the analog signals of an even number are respectively outputted from the even number terminals OS2, OS4 and OS6 at the same phase as that of the aforementioned analog signals.

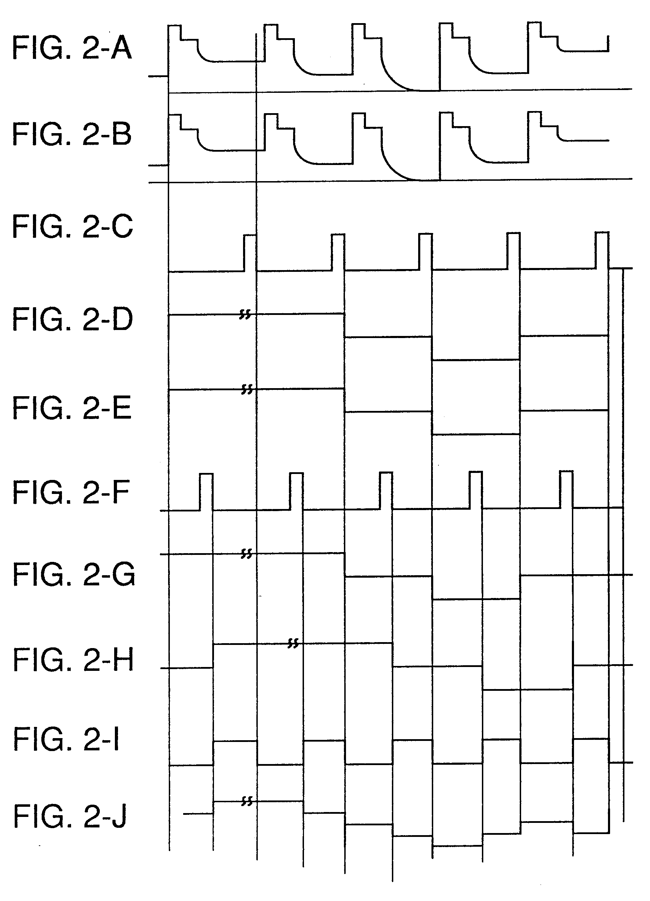

After the analog signal of an odd number sent from the color image sensor 1 has been outputted to the first transmission line 4 through the first buffer 2 and the resistor 3 that determine the output impedance, the analog signal is outputted from the first transmission line to the resistor 5 of the same impedance. Also, the analog signal of an odd number is outputted to the first sample holding circuit (referred to as an S/H circuit, hereinafter) 7 from the output terminal of the resistor 5 through the buffer 6, and then the signal is subjected to the sample holding processing in the first S/H circuit 7, so that the noise in the high frequency region can be removed and a discrete signal (shown in D of Fig. 2) is formed. Also, the analog signal of an odd number is outputted from the first S/H circuit 7 to the first cramp circuit 8, and the signal is subjected to the cramp processing in the first cramp circuit 8 so that the DC level is determined, and then the signal is outputted to the synthesizing circuit 9.

On the other hand, the analog signal of an even number sent from the color image sensor 1 is outputted to the second transmission line 12 through the second buffer 10 and the resistor 11 that determine the output impedance, and then the signal is outputted from the second transmission line 12 to the resistor 13 of the same impedance. Also, the analog signal of an even number is outputted from the output terminal of the resistor 13 to the second S/H circuit 15 through the buffer 14, so that the signal is subjected to the sample holding processing in the second S/H circuit 15 so that the noise of the high frequency region is removed a discrete signal (shown by E in Fig. 2) is formed. The analog signal of an even number is outputted from the second S/H circuit 15 to the third S/H circuit 16, and the analog signal is subjected to the sample holding processing in the third S/H circuit so that the phase of the signal is delayed by half the period of the clock signal compared with the phase of the signal of an odd number, and then the signal is outputted to the second cramp circuit 17. After the analog signal of an even number has been subjected to the cramp processing, it is outputted from the second cramp circuit 17 to the synthesizing circuit 9.

After the inputted analog signal of an odd number and that of an even number have been synthesized in the synthesizing circuit 9, they are outputted to the third cramp circuit 19 through the amplifier 18. The amplifier 18 amplifies the analog signal so that the amplitude of the full-scale input of the A/D converter 20 can be use more effectively. In this case, the digital signal outputted from the A/D converter 20 is inputted into the CPU 22 through the I/O 21. The CPU 22 outputs a control signal to the D/A converter 23 in accordance with the input signal, and the D/A converter 23 controls the output voltage sent to the amplifier 18 so that the gain of the amplifier 18 can be the most optimum. The third cramp circuit 19 cramp-processes the synthesized analog signal in the same manner as mentioned before, and then the signal is outputted to the A/D converter 20. In the A/D converter 20, the analog signal is converted into a digital signal, and then the converted signal is outputted, for example, to the image processing apparatus.

The processing pulse generating section 24 is controlled by the CPU 22, and the generated pulses are sent to each circuits, for example the first to the third S/H circuits 7, 15, 16, and the first cramp circuit 8 in order to operate those units.

Next, the operations will be explained as follows.

The analog signal of an odd number (shown by A in Fig. 2) outputted from the color image sensor 1 is inputted into the first S/H circuit 7 through the first buffer 2, the resistor 3, the first transmission line 4 and the buffer 6. On the other hand, the analog signal of an even number (shown by B in Fig. 2) outputted from the color image sensor 1 is inputted into the second S/H circuit 15 through the second buffer 10, the resistor 11, the second transmission line 12 and the buffer 14. At this time, the same operation pulse signal shown by C in Fig. 2 is inputted into the first and second S/H circuits 7 and 15 from the processing pulse generating section 24. Therefore, the analog signals outputted from the first and second S/H circuits 7, 15 become the signals of the same phase that have been subjected to the sample holding processing as shown by D and E in Fig. 2.

The analog signal of an odd number outputted from the first S/H circuit 7 is subjected to the cramp processing in the first cramp circuit 8 so that the DC level is determined. After that, the signal is inputted into the synthesizing circuit 9.

On the other hand, the analog signal of an even number sent from the second S/H circuit 15 is inputted into the second cramp circuit 17 through the third S/H circuit 16. The phase of the operation pulse signal inputted into the third S/H circuit 16 from the processing pulse generating section 24 is delayed by half the period of the clock signal compared with the operation pulse signal (shown by C in Fig. 2) of the second S/H circuit 15 as shown by F in Fig. 2. The phase of the analog signal of an even number outputted from the third S/H circuit 16 is delayed by half the period of the clock signal as compared with the input as shown by H in Fig. 2. After the analog signal of an even number has been processed in the second cramp circuit 17, it is inputted into the synthesizing circuit 9.

Consequently, the phase of the analog signal of an even number inputted into the synthesizing circuit 9 is delayed by half the period of the clock signal compared with the analog signal of an odd number. The analog signal of an even number and that of an odd number are synthesized in the synthesizing circuit 9. The synthesized analog signal (shown by J in Fig. 2) is amplified by the amplifier 18. After that, the signal is outputted into the A/D converter 20 through the third cramp circuit 19. Then, the digital signal subjected to the A/D conversion by the A/D converter 20 is outputted, for example, into an image processing apparatus.

As explained above, the analog signal of an odd number and that of an even number are outputted from the pixel array of the color image sensor 1, wherein the phases of the signals are the same. Therefore, the phase of the clock signal to drive the signal of an odd number and that to drive the signal of an even number become the same, and also the phase of the reset signal to drive the signal of an odd number and that to drive the signal of an even number become the same. For that reason, these signals can be prevented from exerting influence upon the other analog signals, so that the occurrence of noise can be avoided, and the S/N ratio characteristics can be improved. Also, after the phase of the signal of an even number outputted from the color image sensor 1 has been delayed compared with the phase of the analog signal of an odd number, these signals are synthesized. Therefore, the output timing in the aforementioned case is the same as that of a conventional color image sensor, so that the circuit structure to process the signal becomes approximately the same as that of a conventional case.

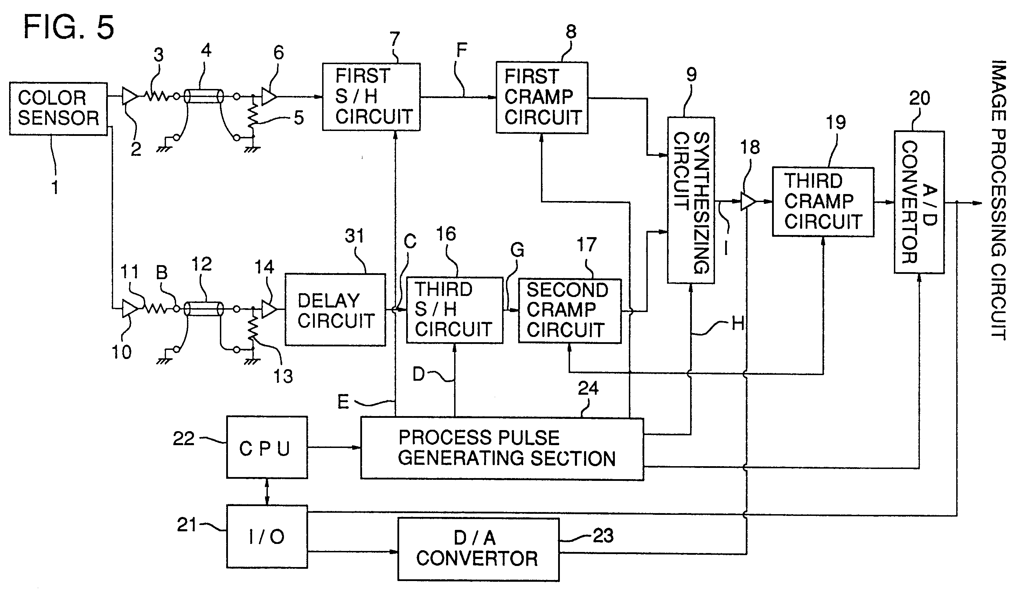

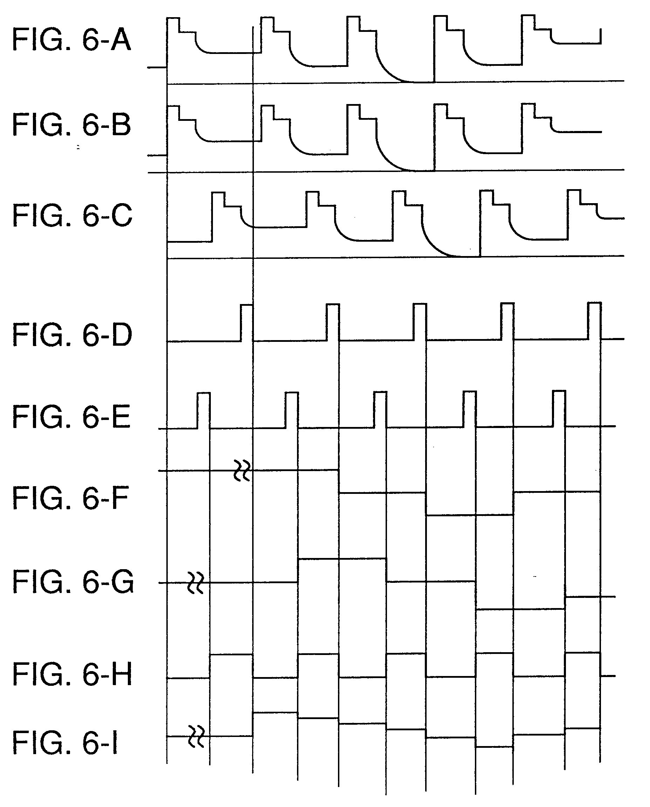

Figs. 5 and 6 show the second example of the first embodiment of the present invention. Like parts in the first examples are identified by the same reference character, and the explanations are omitted here.

In the second example, the delay circuit 31 is provided instead of the second S/H circuit 15 of the aforementioned first example, so that the phase of the analog signal of an even number is delayed by half the period of the clock signal compared with the phase of the analog signal of an odd number.

That is, the phase of the analog signal of an even number (shown by B in Fig. 6) outputted from the color image sensor 1 is delayed (shown by C in Fig. 6) in the delay circuit 31 by half the period of the clock signal compared with the phase of the analog signal of an odd number (shown by A in Fig. 6). After that, the signal is inputted into the third S/H circuit 16.

The aforementioned constitution can provide the same effect as that of the first example.

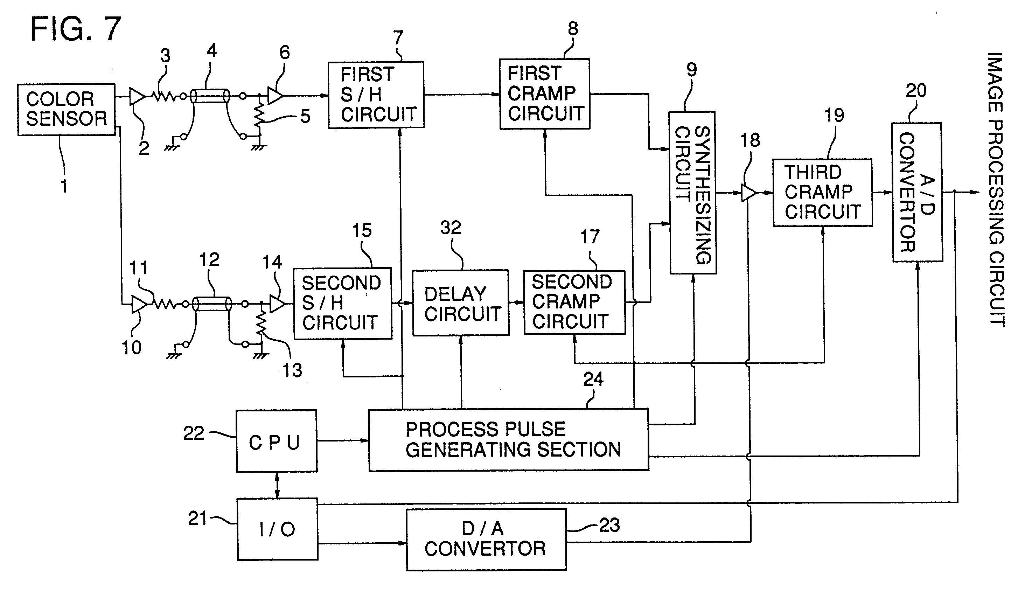

Fig. 7 shows the third example of the first embodiment of the present invention.

In the third example, the delay circuit 32 is provided instead of the third S/H circuit 16 of the first example, and the phase of the analog signal of an even number is delayed in the delay circuit 32 by half the period of the clock signal compared with the phase of the analog signal of an odd number.

The aforementioned constitution can provide the same effect as that of the aforementioned examples. Further, in this example, the phases of the sample pulses inputted into each S/H circuit are the same. Therefore, each sample pulse is mixed into each signal in a compressed condition, so that the S/N ratio characteristics can not be deteriorated, which is very advantageous.

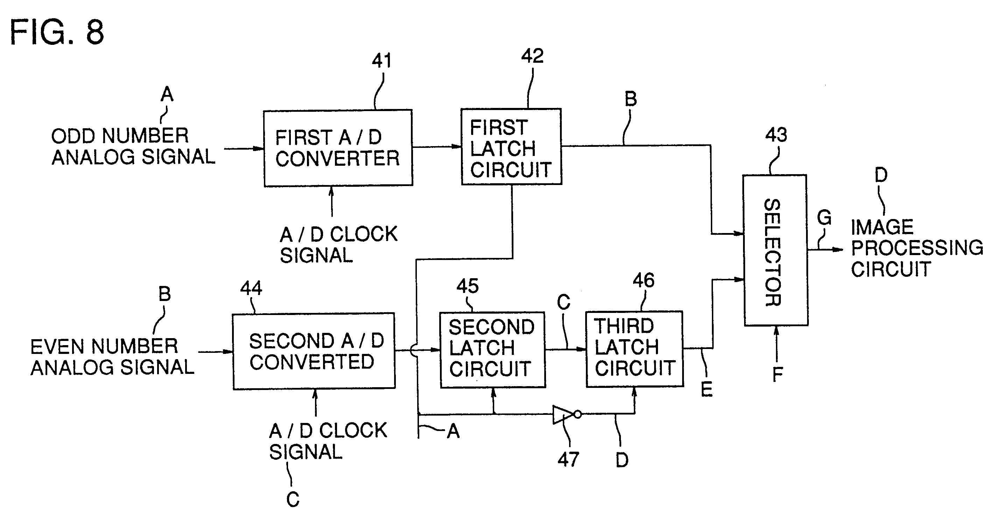

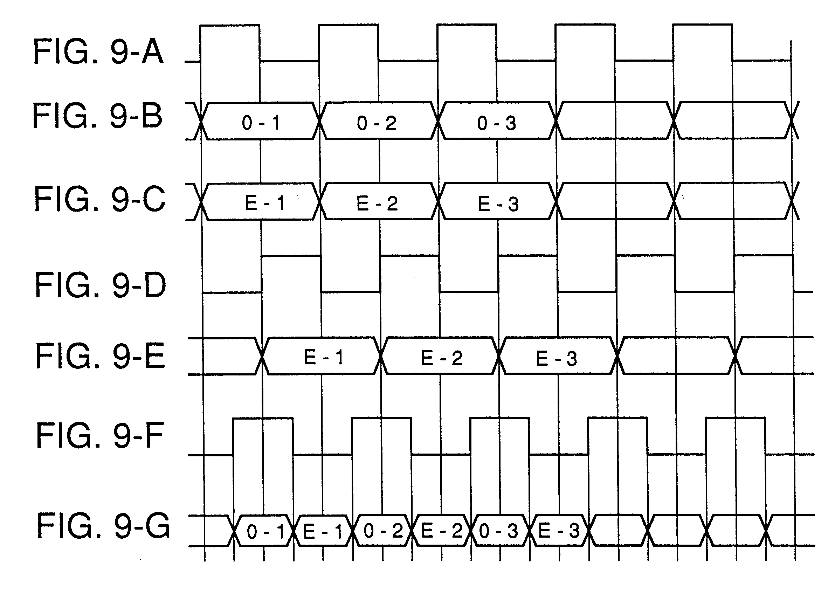

Figs. 8 and 9 show the fourth example of the first embodiment of the present invention.

In this example, the analog signal of an odd number is converted into a digital signal of an odd number by the first A/D converter 41, and the converted signal is outputted into the first latch circuit 42. In the first latch circuit 42, the digital signal of an odd number is subjected to the latch processing (shown by B in Fig. 9). After that, the signal is outputted into the selector 43.

On the other hand, the analog signal of an even number is converted into a digital signal of an even number by the second A/D converter 44, and then the signal is outputted into the second latch circuit 45. In the second latch circuit 45, the analog signal of an even number is subjected to the latch processing (shown by C in Fig. 9), and then the processed signal is outputted into the third latch circuit 46. The phase of the operation pulse signal of the third latch circuit 46 is inverted by the inverter 47 so that it is reverse to the phase of the second latch circuit 45. For that reason, the phase of the digital signal of an even number outputted from the third latch circuit 46 to the selector 43, is delayed by half the period of the clock signal compared with the phase of the digital signal of an odd number.

As shown by D in Fig. 9, the selector 43 alternately selects (synthesizes) between the digital signal of an odd number (shown by O-1 and O-2 in the drawing) and the digital signal of an even number (shown by E-1 and E-2 in the drawing), and the selected signal is outputted, for example, into an image forming apparatus. Incidentally, the first and second latch circuits 42, 45 may not be provided.

The constitution of this example can provide the same effect as that of the aforementioned examples.

As explained above, according to the first embodiment of the present invention, the pixel signal of an odd number and that of an even number are outputted from the pixel array of the solid image sensor, wherein the phases of both pixel signals are approximately the same, and the phase of the outputted pixel signal of an even number is delayed by a predetermined period compared with the phase of the pixel signal of an odd number. Therefore, the occurrence of noise of the pixel signal can be prevented, and the S/N ratio characteristics can be improved. Further, the operation can be carried out by the same circuit structure as a conventional one.

With reference to the attached drawings, an example of the second embodiment will explained as follows.

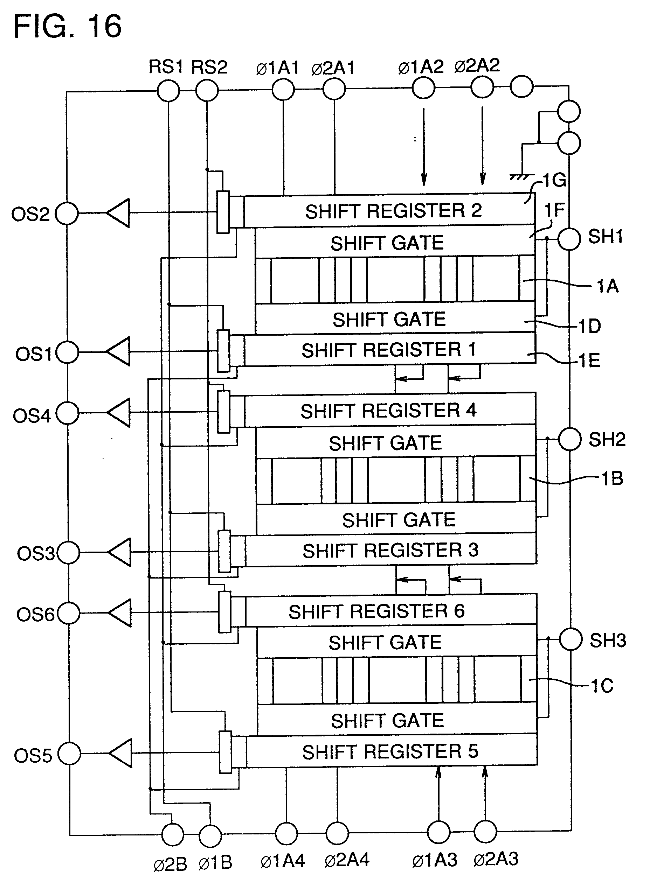

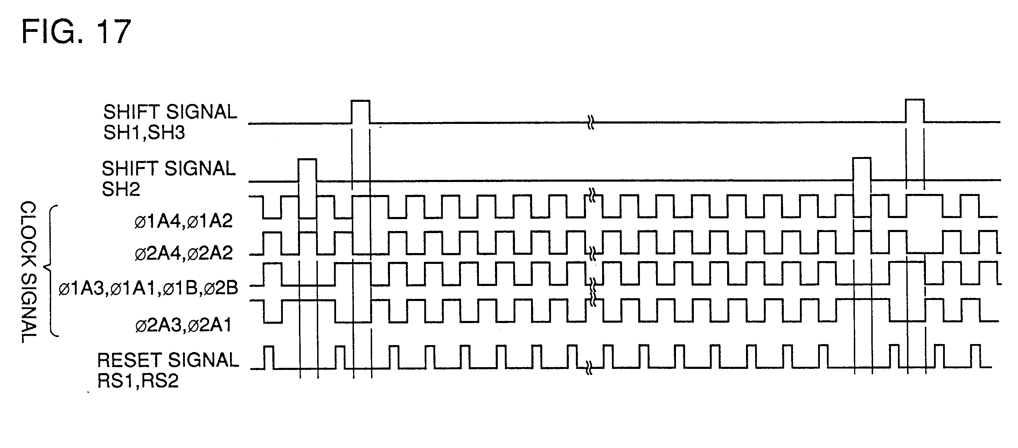

First, referring to Figs. 16 and 17, the specific structure and operation of the color image sensor 101 will be explained. As illustrated in Fig. 16, the color image sensor 101 includes pixel arrays 101A, 101B and 101C composed of a large number of pixels aligned in a line. For example, the pixel array 101A is used for detecting blue, the pixel array 101B is used for detecting green, and the pixel array 101C is used for detecting red.

Each of the pixel arrays 101A, 101B and 101C is provided with a shift gate 101D and a shift register 101E that are used for outputting an analog signal (referred to as an analog signal of an odd number, hereinafter) from a pixel of an odd number. Further, each of the pixel arrays 101A, 101B and 101C is provided with a shift gate 101F and a shift register 101G that are used for outputting an analog signal (referred to as an analog signal of an even number, hereinafter) from a pixel of an even number.

Shift signals SH1, SH2 and SH3 are respectively inputted from a drive circuit (not shown) into the shift gate 101D and 101F of the pixel arrays 101A, 101B and 101C through the shift terminals SH1, SH2 and SH3. Clock signals Φ1A1 to Φ2A4, Φ1B and Φ2B for transmission are respectively inputted into the shift registers 101E and 101G of the pixel arrays 101A, 101B and 101C through the clock terminals Φ1A1 to Φ2A4, Φ1B and Φ2B. An analog signal of an odd number is outputted from the shift registers 101E of the pixel arrays 101A, 101B and 101C to a signal processing circuit (not shown) through the terminals OS1, OS3 and OS5 of an odd number. On the other hand, an analog signal of an even number is outputted from the shift registers 101G of the pixel array 101A, 101B and 101C into the signal processing circuit through the terminals OS2, OS4 and OS6 of an even number.

Reset signals RS1 and RS2 are inputted into the gates of the shift registers 101E and 101G through the reset terminals RS1 and RS2.

When the same shift signal is inputted into the shift gates 101D and 101F as shown in Fig. 17, an analog signal of an odd number is outputted from the pixel of an odd number to the shift register 101E through the shift gate 101D. On the other hand, an analog signal of an even number is outputted from a pixel of an even number to the shift register 101G through the shift gate 101F, wherein the phase of the signal of an even number is the same as that of the signal of an odd number.

Then, the shift registers 101E and 101G are driven by the clock signals Φ1A1 to Φ2A4, Φ1B and Φ2B, so that the analog signal is transmitted through the shift registers 101E and 101G. Therefore, analog signals of an odd number are outputted from the odd number terminals OS1, OS3 and OS5 into the signal processing circuit. On the other hand, analog signals of an even number are outputted fro the even number terminals OS2, OS4 and OS6 to the signal processing circuit.

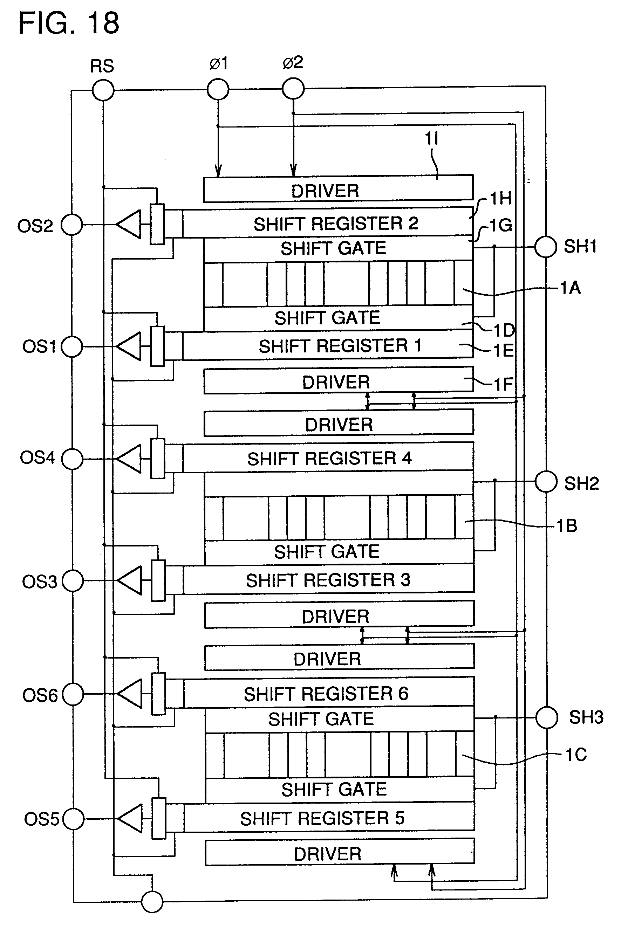

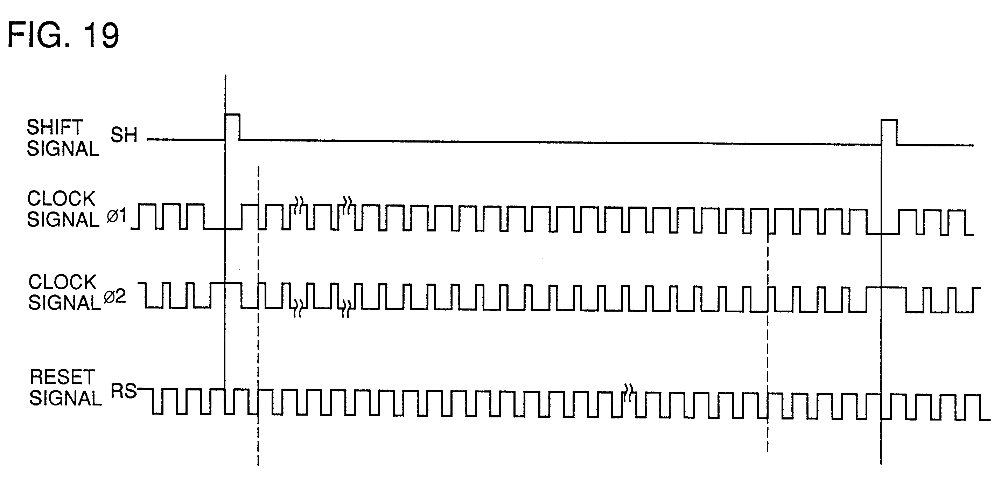

The specific structure and operation of another example of the color image sensor 101 are shown in Figs. 18 and 19. Like parts in Figs. 16 are identified by the same reference character, and the explanations are omitted.

In this example, drivers 101H and 101I are provided in order to drive the shift register 101E for transmitting an analog signal of an odd number and the shift register 101G for transmitting an analog signal of an even number. As shown in Fig. 19, clock signals Φ1 and Φ2 are inputted into the drivers 101H and 101I, so that the shift registers 101E and 101G are driven in 2 phases by the drivers 101H and 101I.

The analog signal of an odd number sent from the color image sensor 101 is outputted into the first transmission line 104 through the first buffer 102 and the resistor 103 that determine the output impedance. After that, the signal is outputted from the first transmission line 104 to the resistor 105 of the same impedance. The analog signal of an odd number is outputted from the output terminal of the resistor 105 to the first sample holding circuit (referred to as an S/H circuit, hereinafter) 107 through the buffer 106, so that the sample holding processing is carried our in the first S/H circuit 107, and the noise of high frequency is removed and a discrete signal is formed (shown by D in Fig. 2). The analog signal of an odd number is sent to the first amplifier 108 from the first S/H circuit 107, and the first amplifier 108 amplifies the analog signal so that the amplitude of the full input scale of the first A/D converter 110 can be use most effectively. Also, the analog signal of an odd number is outputted to the first cramp circuit 109 from the first amplifier 108, and subjected to the cramp-processing in the first cramp circuit 109 so that the DC level is determined. After that, the signal is outputted to the first A/D converter 116.

On the other hand, the analog signal of an even number sent from the color image sensor 101 is outputted to the second transmission line 113 through the second buffer 111 and the resistor 112 that determine the output impedance, and then the signal is outputted from the second transmission line 113 to the resistor 114 of the same impedance.

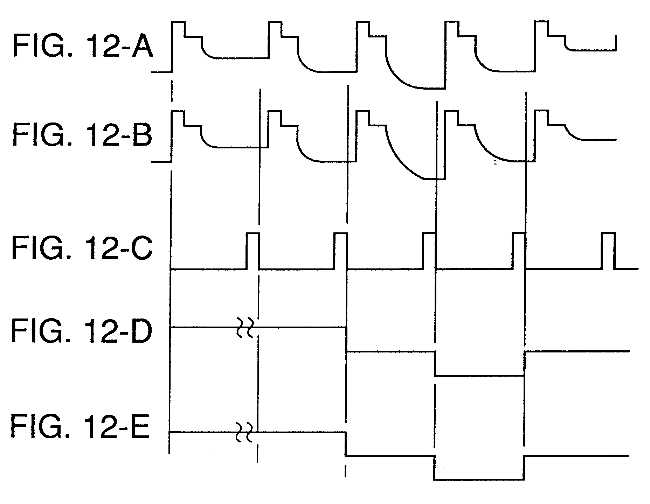

Also, the analog signal of an even number is outputted from the output terminal of the resistor 111 to the second S/H circuit 116 through the buffer 115, so that the signal is subjected to the sample holding processing in the second S/H circuit 116 so that the noise of the high frequency region is removed and a discrete signal (shown by E in Fig. 12) is formed. The analog signal of an even number is outputted from the second S/H circuit 116 to the second amplifier 117, and the second amplifier 117 amplifies the analog signal so that the amplitude of the full input scale of the second A/D converter 119 can be use most effectively. An analog signal of an even number is outputted from the second amplifier 117 to the second cramp circuit 118, and the signal is subjected to the cramp-processing so that the DC level is determined. After that, the signal is outputted into the second A/D converter 119.

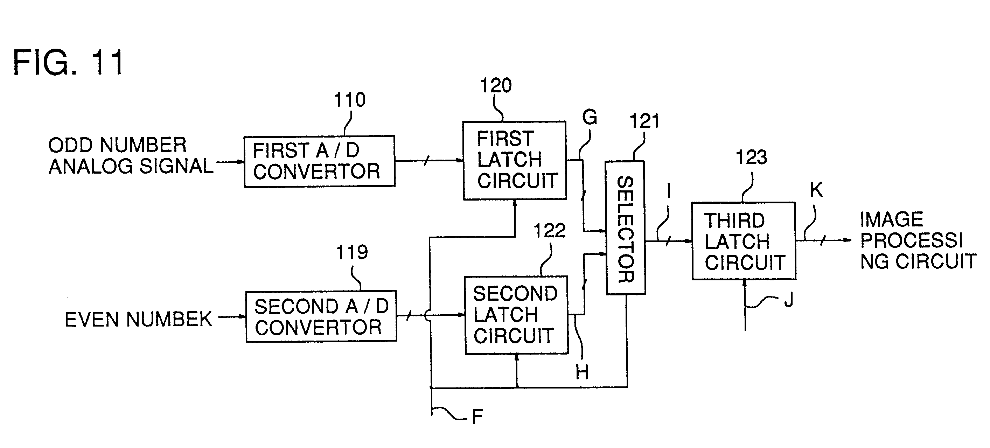

The analog signal of an odd number is converted into a digital signal of an odd number by the A/D converter 110. After that, as shown in Fig. 11, the signal is inputted into the first latch circuit 120, and in the first latch circuit 120, the digital signal of an odd number is subjected to the latch-processing, and then outputted into the selector 121.

On the other hand, the analog signal of an even number is converted into a digital signal of an even number by the second A/D converter 119, and outputted into the second latch circuit 122. In the second latch circuit 122, the digital signal of an even number is subjected to the latch-processing, and outputted into the selector 121.

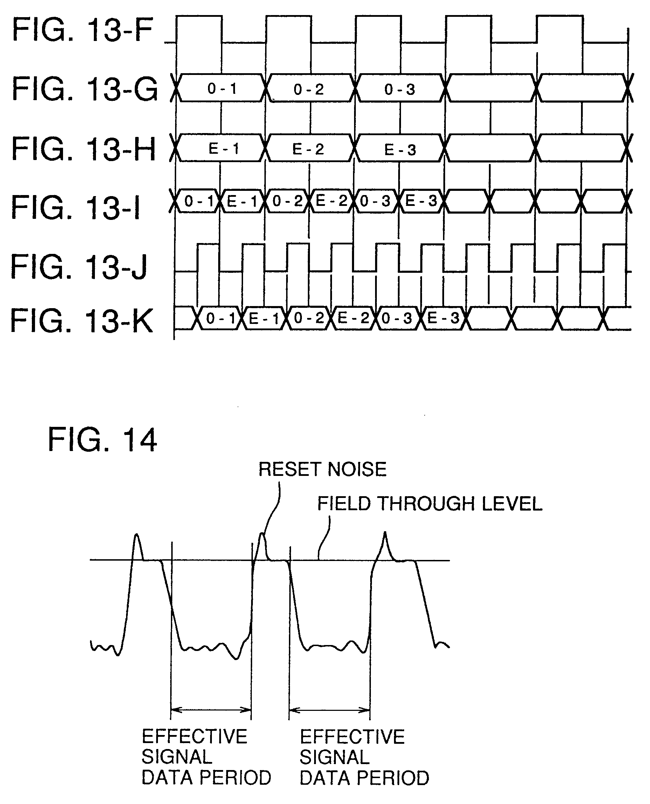

The selector 121 alternately selects the inputted digital signal of an odd number and that of an even number, and the synthesized signal is outputted into the third latch circuit 123 from the selector 121. To be more specific, the first half of the digital signal of an odd number (including the first half of the effective data period) and the latter half of the digital signal of an even number (including the latter half of the effective data period) are selected as shown by I in Fig. 13, and the selected signals are outputted into the third latch circuit 123 in the manner of a time series. The inputted synthesized signal is subjected to the latch-processing in the third latch circuit 123, and the phase of the signal is delayed by a predetermined period of time, and then the signal is outputted, for example, into the image processing apparatus.

The processing pulse generating section 124 is controlled by the CPU 125. The processing pulse generating section 124 outputs pulse signals for operation to the first and second S/H circuits 107 and 116, the first and second cramp circuits 109 and 118, the first to the third latch circuits 120, 122 and 123, and the selector 121. Also, the CPU 125 outputs a clock signal to the first and the second A/D converters 110 and 119 through the I/O. Further, the CPU 125 controls the output voltage to the first and the second amplifiers 108 and 117 through the I/O 126, and the first and the second D/A converters 127 and 128.

Next, the function will be explained as follows.

The analog signal of an odd number (shown by A in Fig. 12) outputted from the color image sensor 101 is inputted into the first S/H circuit 107 through the first buffer 102, the resistor 103, the first transmission line 104, and the buffer 106. On the other hand, the analog signal of an even number (shown by B in Fig. 12) is inputted into the second S/H circuit 116 through the second buffer 111, the resistor 112, the second transmission line 113, and the buffer 115. In the first and second S/H circuits 107 and 116, each analog signal is subjected to the sample holding processing. Since the operation pulse signal shown by C in Fig. 12 is inputted into the first and the second S/H circuits 107 and 116 from the processing pulse generating section 24, the first and the second S/H circuits 107 and 116 output the analog signals shown by D and E in Fig. 12, the analog signals being of the same phase and subjected to the sample holding processing.

The analog signal of an odd number outputted from the first S/H circuit 107 is amplified by the first amplifier 108, and then subjected to the cramp-processing in the first cramp circuit 109 so that the DC level is determined. After that, the signal is inputted into the first A/D converter 110. On the other hand, the analog signal of an even number outputted from the second S/H circuit 116 is amplified by the second amplifier 117. After that, the analog signal is subjected to the cramp-processing in the second cramp circuit 118 so that the DC level is determined, and inputted into the second converter 119.

Then, the analog signals of an odd number are converted into the digital signals of an odd number (shown by O-1, O-2, and O-3 in Fig. 13) by the first A/D converter 110. After that, the digital signals of an odd number are subjected to the latch-processing (shown by G in Fig. 13) by the first latch circuit 120. After that, the digital signals are inputted into the selector 121. On the other hand, the analog signals of an even number are converted into digital signals of an even number (shown by E-1, E-2 and E-3 in Fig. 13) by the second converter 119. After that, the digital signals of an even number are subjected to the latch-processing (shown by H in Fig. 13) by the second latch circuit 122, and then inputted into the selector 121. In this case, the digital signal of an odd number and that of an even number are inputted into the selector 121 in the same phase.

The selector 121 alternately selects the first half of the inputted digital signal of an odd number and the latter half of the digital signal of an even number, and the synthesized signal is outputted into the third latch circuit 123 in the manner of a time series as shown by I in Fig. 13. The inputted synthesized signal is synchronized with the image clock signal J by the third latch circuit 123, and outputted, for example, into an image processing apparatus.

As described above, according to the present invention, analog signals of an odd number and those of an even number are separately taken out from the pixel arrays, and the analog signals are processed in the same phase. Therefore, the phases of the clock signals and those of the reset signals become the same. For that reason, these signals do not affect the other analog signals. Accordingly, the noise can not be mixed with the analog signals, and the S/N ratio characteristics can be improved and the field through level can be stabilized.

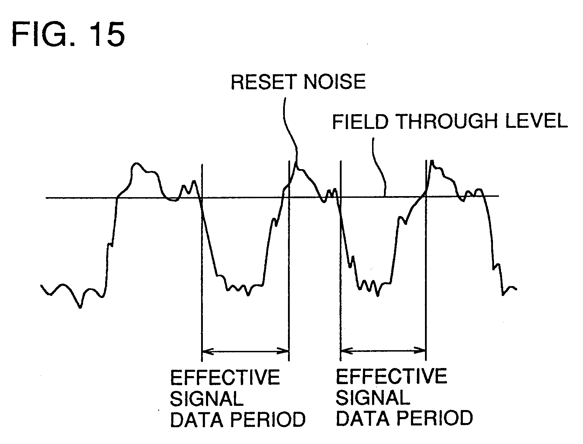

The aforementioned effects will be explained with reference to the waveform observation data shown in Figs. 14 and 15, wherein Fig. 14 is an output waveform diagram in which the same phase driving is carried out according to the present invention, and Fig. 15 is an output waveform diagram in which the conventional driving method is carried out. In the case of the same phase driving of the present invention, the timing of first transition and that of last transition are located out of the effective periods of the analog signals (shown in Fig. 14). Therefore, the analog signal is not affected by the reset and clock signals, so that the noise is not mixed into the analog signal in the effective period of the signal, and a clear analog signal without any noise can be ensured. Even outside of the effective period of the signal, the noise range is reduced by the other reset and clock signals, so that the signal waveform can be stabilized as shown in Fig. 14 and the field-through-level can be stabilized.

On the other hand, in the case of the conventional method, the timing of first transition and that of last transition are located in the effective periods of the analog signals. Therefore, the analog signals in the effective period of the signal are greatly disturbed by the noise as shown in Fig. 15. Even outside of the effective period of the signal, the noise caused by the other reset and clock signals is caused in a wide range, so that the signal waveform can not be stabilized and the field-through-level can not be stabilized, either.

According to the second embodiment of the present invention, after the analog signal of an odd number and that of an even number have been converted into digital signals, the first half of the digital signal of an odd number and the latter half of the digital signal of an even number are selected so that they are synthesized in the manner of a time series. Therefore, the timing of the signal output of the invention is approximately the same as that of the conventional color image sensor. Consequently, the signal processing can be carried out by the approximately same circuit structure as the conventional one.

As explained above, according to the second embodiment of the present invention, an analog signal of an odd number and that of an even number are outputted from a pixel array of a solid image sensor, wherein the phase of the analog signal of an odd number and that of the analog signal of an even number are approximately made to coincide with each other. At the same time, after each outputted analog signal has been converted into a digital signal, the first half of the effective period of data of the digital signal of an odd number and the latter half of the effective period of data of the digital signal of an even number are selected, and they are synthesized in the manner of a time series. Accordingly, the noise is not mixed with the analog signal, and the S/N ratio characteristics can be greatly improved, and further the field-through-level can be stabilized. Furthermore, the signal processing can be carried out by the approximately same circuit structure as the conventional one.

## Claims

1. A method of processing image signals generated by an image sensor, comprising the steps in the sequence set forth:
dividing image signals of a line image into first group signals assigned odd number addresses and second group signals assigned even number addresses;
outputting the first group signals and the second group signals substantially at the identical phase;
delaying the second group signals by a predetermined time period from the first group signals, and
synthesizing the first group signals and the second group signals in the order of time sequence.

2. The method of claim 1, wherein the delaying is conducted by a sample holding circuit.

3. The method of claim 1, wherein the delaying is conducted by a delaying circuit.

4. A method of processing analog image signals generated by an image sensor, comprising the steps in the sequence set forth:
dividing analog image signals of a line image into first group analog signals assigned odd number addresses and second group analog signals assigned even number addresses;
converting the first group analog signals and the second group analog signals into first group digital signals and second group digital signals;
selecting the first half of an effective data period of each of the first group digital signals and the latter half of an effective data period of each of the second group digital signals; and
synthesizing the selected first half and the latter half in the order of time sequence.
